# FASCICULE DE BREVET EUROPEEN

(11) **EP 2 590 882 B1**
(45) Date de publication et mention de la délivrance du brevet: **14.05.2014**
(21) Numéro de dépôt: 11744042.0
(22) Date de dépôt: 04.07.2011
(51) Int. Cl.: B65G 33/26

(54) **KIT POUR RÉALISER UNE VIS D'ARCHIMÈDE**
BAUSATZ ZUM AUFBAUEN EINER ARCHIMEDISCHEN SCHRAUBE
KIT FOR BUILDING AN ARCHIMEDES SCREW

(30) Priorité: 15.03.2011 FR 1100773; 05.07.2010 FR 1002824
(43) Date de publication de la demande: 15.05.2013
(73) Titulaire: Exventys, 02100 Saint Quentin (FR)
(72) Inventeur: OSMANI, Samir, F-59240 Dunkerque (FR)
(74) Mandataire: Bureau Duthoit Legros Associés
(86) Numéro de dépôt international: PCT/FR2011/000390
(87) Numéro de publication internationale: WO 2012/004470

(56) Documents cités:
- DE-U1- 9 015 999
- NL-A- 7 100 884
- US-A- 3 178 210
- US-A- 5 687 832

## Description

La présente invention concerne un kit pour réaliser une vis d'Archimède, perfectionnant le procédé de fabrication des vis d'Archimède par assemblage de secteurs de l'état de l'art. Ces vis sont utilisées pour la fabrication de systèmes de dosage ou de pompage de fluides visqueux, de liquides chargés de matières solides, de solides sous forme pulvérulente ou en granulés et se comportant comme de tels fluides visqueux.

Plus spécifiquement, cette invention est particulièrement utile pour réaliser simplement des systèmes de dosage ou de pompage de produits liquides corrosifs ou se présentant sous forme de granulés.

Le principe de la vis d'Archimède existe depuis plus de 22 siècles. A travers tous les pays et tous les âges, de nombreuses solutions pour réaliser de tels équipements ont été mises en oeuvre. Les ouvrages de référence sur la conception et les modes de réalisation de vis d'Archimède rédigés par M DAVAINE et datant de 1835 et 1846 présentent l'état de l'art sur ces techniques. Les principaux modes de réalisation consistent généralement à confectionner les filets à partir de tronçons hélicoïdaux soudés, collés ou fixés mécaniquement sur un axe central en métal ou en bois. Certaines vis sont réalisées par usinage dans la masse. Une variante permet de réaliser les filets par enroulement filamentaire. De nombreuses entreprises ont généré une activité basée sur la vente de petits éléments en métal découpés et cintrés permettant la réalisation de vis sur mesure assemblées, généralement par chaudronnerie. Le choix des matériaux reste limité et le temps de réalisation de la vis d'Archimède reste long. L'une des solutions fréquemment mise en oeuvre par l'homme de l'art consiste à réaliser plusieurs secteurs de filets, usinés ou moulés, puis à les assembler sur un axe. La forme de l'axe, par exemple hexagonale, cylindrique avec rainure de clavette, assure une liaison intime avec les différents secteurs. Cet axe permet de transmettre l'effort de rotation du moteur entraînant la vis aux différents secteurs. Cette méthode permet de réaliser simplement des vis de grandes longueurs, de faire varier le pas ou la géométrie, d'adjoindre des fonctions particulières de raclage ou des nez de vis spécifiques adaptés aux environnements de service. Des cas particuliers de vis assemblées par secteurs sur un axe et présents depuis de nombreuses années dans le domaine public ont la particularité de comporter des terminaisons coniques. Le choix des matériaux pouvant être mis en oeuvre pour la réalisation des secteurs est beaucoup plus large que celui rencontré habituellement en chaudronnerie et permet à la place du métal d'utiliser du plastique, du thermodurcissable et même de la terre cuite. La nature du matériau constituant l'axe peut varier en fonction du couple à transmettre. Elle peut être métallique, thermoplastique, composite. Ces solutions sont particulièrement adaptées pour la réalisation de vis de grande longueur et devant supporter un couple important pour mettre en mouvement un fluide très visqueux devant par exemple passer à travers un tamis. L'utilisation de secteurs permet également de ne remplacer qu'une zone endommagée lors de l'exploitation au lieu de remplacer complètement toute la vis.

L'inconvénient de ce dernier mode de réalisation de vis par secteurs vient du défaut de continuité des spires lors de leur assemblage sur l'axe central et de la perte de surface de contact permettant la transmission du couple de rotation. Les secteurs ont plusieurs pas de longueur du fait de la nécessité d'assurer une certaine résistance mécanique lors de la transmission d'efforts importants et ils ne peuvent avoir une faible longueur indispensable pour réaliser des vis de petite dimension pour les systèmes de dosage, ou encore pour réaliser des vis modulaires de différentes dimensions, entre autres adaptées à la fabrication de systèmes de dosage.

Le raccordement des spires de chaque section se fait par diminution progressive de son épaisseur jusqu'à terminer sur une arête très fine et en forme de sifflet. Cette solution permettant la fabrication par empilage successif des secteurs conduit au cours de l'utilisation de la vis à la déformation des zones de jonction des spires résultant de l'introduction de particules solides entre les zones de raccordement des secteurs. II se forme alors une arête très tranchante pouvant conduire à l'endommagement du produit à convoyer, en particulier lorsqu'il s'agit de fruits à jus comme le raisin. Ce phénomène est considérablement amplifié en présence de fluides comprenant des fibres. Il se produit alors des bourrages de matière. La durée de vie de la vis est par le fait rapidement diminuée.

On connaît, par exemple, du document EP 0-200-117 ou encore du document W0 2008/001171 une vis d'Archimède réalisée par assemblage de secteurs. Selon ces documents, qui décrivent le préambule de la revendication 1, les secteurs ont plusieurs pas de longueur et la spire se termine, au niveau de la zone de raccordement des secteurs sur une arête très fine en forme de sifflet. Les noyaux des secteurs du document W0 2008/001171 sont pourvus, en outre, au niveau de leurs zones de raccordement de parties mâle/ femelle, plus particulièrement un couple nervure/rainure, mutuellement engageant, destinées à la transmission du couple entre secteurs. Selon l'inventeur, ces parties ne permettront pas la transmission d'un couple important, sans risque de casse.

Pour assurer une liaison entre les sections et l'axe, il est également nécessaire de prévoir une fixation par l'utilisation d'arbres en forme de polygones s'imbriquant dans une forme intérieure identique réalisée dans la section ou alors en prenant un jonc comportant une clavette. Cette solution est cependant insuffisante pour assurer une bonne tenue des sections constituées d'un seul pas de longueur. Les secteurs en un seul filet et de un pas de longueur sont particulièrement faciles à fabriquer en petite série et ils sont parfaitement adaptés pour la réalisation de vis de petite longueur pour les systèmes de dosage. En revanche le montage par emboîtement des secteurs d'un filet implique de laisser dépasser une portion de filet pour permettre un emboîtement. Cette configuration fragilise le secteur et risque de conduire à l'arrachement sous contraintes mécaniques de cette partie du filet.

Le kit selon l'invention permet de remédier à ces inconvénients. Il s'agit d'un assemblage de secteurs à une spire ayant une géométrie particulière permettant leur emboîtement après assemblage sur un axe. Cette géométrie ne permet pas la formation de lacunes ou d'arêtes pouvant dégrader les performances de la vis. Ces secteurs comportent en effet selon une première caractéristique, une seule spire épaisse correspondant à un pas de la vis seulement. Ce filet suit une courbe hélicoïdale et se termine par un plan incliné d'un angle particulier. Le filet ne se termine donc pas par une arête pouvant devenir tranchante aux extrémités. Ce filet est raccordé à un noyau présentant une forme sinusoïdale parallèle à celle du filet et dont la hauteur totale correspond au pas de la vis. La forme du noyau permet un empilage des spires et une imbrication maximisant la surface de contact. Ce même noyau est creux et comprend une forme permettant son enfilage sur un axe. Selon une deuxième caractéristique, la courbe hélicoïdal définissant le contour du noyau est décalée de celle de la spire par une distance correspondant au moins à l'épaisseur de cette spire. Ce décalage permet de créer une face d'appui large sur la section du filet. Ainsi l'utilisateur réalise une vis d'Archimède en enfilant successivement les secteurs dont toute la face vient se plaquer sur le filet suivant sans laisser d'arêtes tranchantes ni de lacunes pouvant dégrader le fonctionnement de la vis.

Les secteurs en un seul filet et d'un pas de hauteur sont particulièrement faciles à fabriquer en petite série et ils sont parfaitement adaptés pour la réalisation des vis de petites longueurs employées pour la fabrication de systèmes de dosage, ou encore pour la réalisation de vis, sur mesure quelle que soit leur longueur.

Aussi l'invention concerne un kit pour réaliser une vis d'Archimède par assemblage de secteurs contigus.

Selon l'invention, les secteurs comprennent un seul filet de longueur correspondant à un pas de vis, constituant une spire de la vis d'Archimède et dans lequel les secteurs s'imbriquent l'un dans l'autre sur un axe, sans formation de lacunes, ni d'arêtes tranchantes, de telle façon à former la spirale hélicoïdale de la vis d'Archimède.

Selon l'invention, les secteurs présentent des faces de terminaison de la spire, chaque face de terminaison étant inclinée d'un angle par rapport à l'axe du secteur de telle façon que les faces de terminaison mutuellement en appui de deux secteurs successifs de la vis d'Archimède soient aptes à permettre une transmission de couple entre lesdits deux secteurs successifs.

Selon l'invention chaque secteur comprend, outre ledit filet constituant la spire de la vis d'Archimède, un noyau pourvu d'une ouverture destinée pour le passage d'un axe, au jeu d'emboîtement près, lesdits secteurs étant destinés à être enfilés sur ledit axe pour réaliser la vis d'Archimède.

En outre les secteurs présentent au moins une zone de raccordement entre noyaux, lesdites zones étant destinées à être mutuellement en appui entre deux secteurs successifs de la vis d'Archimède, ladite zone de raccordement entre noyaux, d'une part, et la face de terminaison de la spire de l'extrémité correspondante dudit secteur, d'autre part, constituant une surface d'appui, non plane, notamment sans arête, la zone de raccordement du noyau suivant notamment une trajectoire parallèle à la trajectoire de la spire ;

Selon des modes de réalisation, pris seuls ou en combinaison :
- ledit angle d'inclinaison entre la face de terminaison de la spire et l'axe du secteur est compris entre 0° et 50°, et de préférence entre 15° et 30° ;
- ledit angle d'inclinaison entre la face de terminaison de la spire et l'axe du secteur est de 25° ;
- ladite ouverture destinée pour le passage de l'axe est de section polygonale ;
- le corps formant le noyau et la spire de chaque secteur consiste en une pièce plastique moulée ;
- ladite ouverture d'un secteur d'extrémité est traversante, de part et d'autre dudit secteur d'extrémité, ladite ouverture présentant une réduction de section interne constituant, d'une part, un premier épaulement destiné à constituer une butée pour l'extrémité de l'axe, et d'autre part, un deuxième épaulement destiné à constituer une butée pour un organe de fixation, telle qu'une vis, destiné à coopérer avec ladite extrémité dudit axe ;
- la définition géométrique d'au moins un secteur est obtenue au moins par la génération d'un volume à partir d'une section et balayage de cette section le long d'une génératrice constituée par la courbe hélicoïdale de la spire dudit secteur, le plan servant de support à ladite section, permettant la génération du volume de la spire et du noyau étant incliné d'un angle identique à l'angle d'inclinaison entre la face de terminaison de la spire et l'axe du secteur ;
- l'un des secteurs au moins est un secteur d'extrémité fermé, ladite spire dudit secteur étant prolongée par un disque de fermeture, de même diamètre que ladite spire ;
- l'un des secteurs au moins est un secteur d'extrémité ouvert, l'une des extrémités de la spire dudit secteur se terminant par une tranche libre, arrondie.

Selon des modes particuliers de réalisation :
- Le noyau comprend un ou plusieurs filets dont la longueur correspond à un seul pas de la vis.
- L'évidement central permettant l'assemblage sur un axe est de forme hexagonale.
- L'évidement central permettant l'assemblage sur un axe est de forme cylindrique avec une rainure de clavette.
- L'évidement central permettant l'assemblage sur un axe est de forme carrée,
- Le raccordement de la spire sur le noyau est rayonné ou à angle droit.
- Le filet est en métal ou en polymère thermoplastique ou en thermodurcissable ou en composite.
- Le raccordement de la courbe hélicoïdale de la spire et de celle du noyau est assuré par une forme rayonnée.

L'invention concerne également une vis d'Archimède obtenue par imbrications successives des secteurs d'un kit conforme à l'invention.

Les dessins annexés illustrent l'invention :
La figure 1 montre en vue de face, et à titre d'exemple non limitatif, un secteur à un filet et de un pas de longueur.
La figure 2 montre une vue arrière et à titre d'exemple non limitatif un secteur composé d'un filet mettant en évidence les deux courbes hélicoïdales constitutives du secteur d'un pas de longueur.
La figure 3 montre à titre d'exemple non limitatif une forme hexagonale permettant l'assemblage des secteurs sur un axe de même forme. La figure 3 montre également la face d'appui du filet.
La figure 4 montre une vue isométrique d'un filet mettant en évidence la face d'appui.

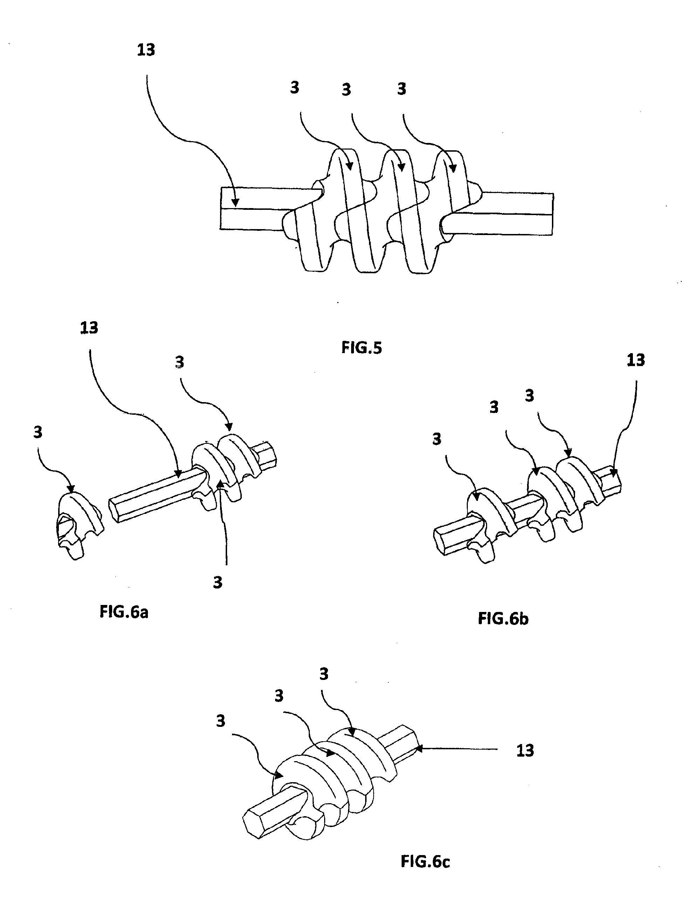

La figure 5 montre le raccordement et la continuité des lignes du filet des différents secteurs assemblés.
Les figures 6a, 6b, 6c montrent les étapes de l'assemblage du kit sur un axe permettant de constituer un tronçon de vis d'Archimède, par exemple constitué de 3 secteurs.
La figure 7 montre un secteur pour réaliser une vis d'Archimède, telle que connue de l'état de la technique, illustrant plus particulièrement la forme en sifflet de la spire au niveau de la zone de raccordement entre secteurs.
La figure 8 illustre une vis d'Archimède, à pas constant, pourvue d'une extrémité fermée et d'une extrémité ouverte, réalisée au moyen d'un kit conforme à l'invention.
La figure 9 illustre une vis d'Archimède, à pas constant, pourvue d'une extrémité fermée et d'une extrémité ouverte, réalisée au moyen d'un kit conforme à l'invention.
La figure 10 est une vue de coupe, selon un plan passant par l'axe de la vis d'Archimède, illustrant la fixation d'un secteur d'extrémité à l'extrémité de l'axe de ladite vis.
La figure 11 illustre une vis d'Archimède, à pas variable, pourvue d'une extrémité fermée et d'une extrémité ouverte, réalisée au moyen d'un kit conforme à l'invention.
Les figures 12, 13, 14, 15, 16 sont, respectivement, des vues de détail des secteurs composant la vis d'Archimède, telle qu'illustrée à la figure 11.
Les figures 12a, 12b sont des vues de détail du secteur tel qu'illustré à la figure 12, avec cotation.
La figure 12c est un tableau indiquant, pour chaque ligne dudit tableau, les valeurs possibles (en millimètres) des cotes du secteur, tel qu'illustré aux figures 12a et 12b.
Les figures 13a, 13b sont des vues de détail du secteur tel qu'illustré à la figure 13, avec cotation.
La figure 13c est un tableau indiquant, pour chaque ligne dudit tableau, les valeurs possibles (en millimètres) des cotes du secteur, tel qu'illustré aux figures 13a et 13b.
Les figures 14a, 14b sont des vues de détail du secteur tel qu'illustré à la figure 14, avec cotation.
La figure 14c est un tableau indiquant, pour chaque ligne dudit tableau, les valeurs possibles (en millimètres) des cotes du secteur, tel qu'illustré aux figures 14a et 14b.
Les figures 15a, 15b sont des vues de détail du secteur tel qu'illustré à la figure 15, avec cotation.
La figure 15c est un tableau indiquant, pour chaque ligne dudit tableau, les valeurs possibles (en millimètres) des cotes du secteur, tel qu'illustré aux figures 15a et 15b.
Les figures 16a, 16b sont des vues de détail du secteur tel qu'illustré à la figure 16, avec cotation.
La figure 16c est un tableau indiquant, pour chaque ligne dudit tableau, les valeurs possibles (en millimètres) des cotes du secteur, tel qu'illustré aux figures 16a et 16b.
Les figures 17a, 17b sont des vues de détail d'un secteur d'extrémité fermée.
La figure 17c est un tableau indiquant, pour chaque ligne dudit tableau, les valeurs possibles (en millimètres) des cotes du secteur, tel qu'illustré aux figures 17a et 17b.
La figure 18 illustre une vis d'Archimède, pourvue d'une extrémité fermée et d'une extrémité ouverte, réalisée au moyen d'un kit conforme à l'invention selon un mode de réalisation.

Aussi l'invention concerne une amélioration des kits de l'état de l'art pour réaliser une vis d'Archimède, par assemblage de secteurs contigus.

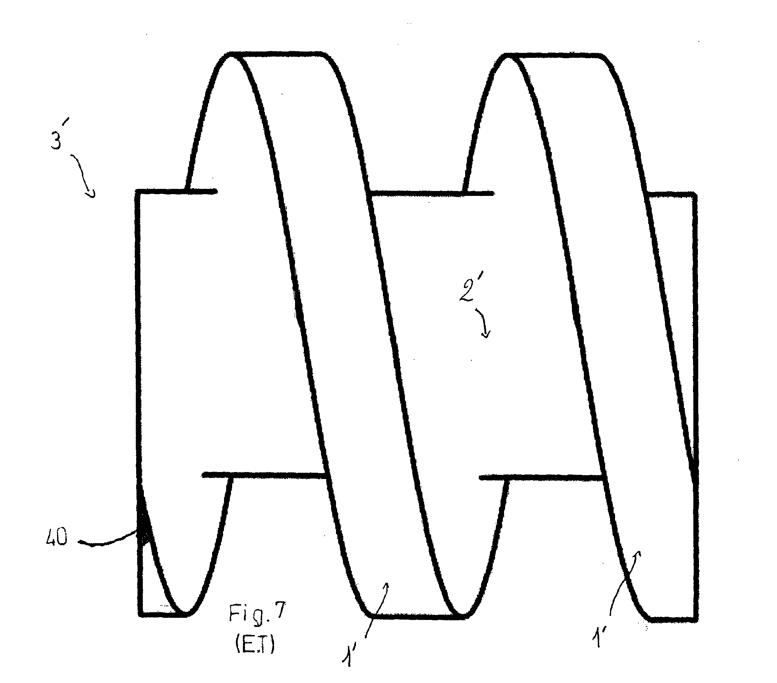

La figure 7 illustre un secteur 3' d'un kit de l'état de l'art, connu par l'inventeur. On observe que ce secteur 3' présente une longueur correspondant à plusieurs pas de la vis d'Archimède. Le filet forme ainsi plusieurs spires 1' de la vis. Ce filet est solidaire rigidement d'un noyau 2' pourvu d'une ouverture pour le passage d'un axe (non illustré) sur lequel sont enfilés lesdits secteurs 3'.

Dans cet état de la technique, la transmission du couple de rotation aux secteurs de la vis d'Archimède est obtenue uniquement par le contact mécanique entre le noyau 2' et l'axe de rotation de la vis d'Archimède, au moyen d'une surface de contact, non circulaire, par exemple polygonale, entre l'axe et le noyau 2', ou encore, au moyen d'une clavette assujettissant en rotation l'axe et le noyau. Aucune transmission de couple n'est possible entre les secteurs. Cette solution oblige de prévoir des secteurs 3' de longueur correspondant à plusieurs pas de la vis afin d'assurer une liaison mécanique suffisante entre l'axe et les secteurs 3'.

On remarque également, au niveau de la zone de raccordement de la spire 1' entre secteurs, une réduction de section se terminant par une arête vive 40, en forme de sifflet. Cette arête vive 40' constitue non seulement une zone de fragilité pour la vis d'Archimède, mais est susceptible, en outre, de détériorer les matières convoyées par la vis d'Archimède.

L'invention permet de remédier à ces inconvénients.

En référence à ces dessins le kit comporte une spire 1 d'un pas de longueur associée à un noyau hélicoïdal 2 de même longueur. L'ensemble constitue un secteur élémentaire 3. La face 4 de terminaison de la spire est inclinée d'un angle 5 donné à titre d'exemple non limitatif de 25° par rapport à l'axe du secteur 6. L'angle 5 peut être notamment compris entre 0° et 50°, de préférence compris entre 15° et 30°. La base 7 de la face 4 de terminaison est, par exemple, normale à la génératrice hélicoïdale du filet 8.

Le noyau 2 servant de base à la spire 1 suit une courbe hélicoïdale 9 parallèle en tout point à la courbe du filet 8 servant de génératrice à la spire 1. La courbe hélicoïdale 9 est décalée d'une valeur correspondant, à titre d'exemple non limitatif, à l'épaisseur 14 de la spire 1 à sa base.

La spire 1 et le noyau 2 constituent un secteur 3 dont la hauteur (longueur) correspond à un pas de la vis d'Archimède obtenue par assemblage des secteurs 3 sur un axe 13. La définition géométrique de la spire 1 et du noyau 2 peut être obtenue par génération d'un volume ou d'une surface à partir d'une section normale à une courbe hélicoïdale correspondant au pas de la vis. Le plan servant de support à la section permettant la génération du volume de la spire 1 et du noyau 2 est incliné d'un angle identique à l'angle 5 et il donne l'inclinaison de la face de terminaison 4 de la spire 1. Par construction les extrémités du noyau 2 se raccordent sur une zone 10 dont la largeur dépend de l'angle 5. Le raccordement 11 des faces du noyau 2 est soit angulaire soit rayonné. Cette géométrie maximise les faces en contact et permet une transmission idéale du couple de rotation de la vis à travers les différents secteurs 3.

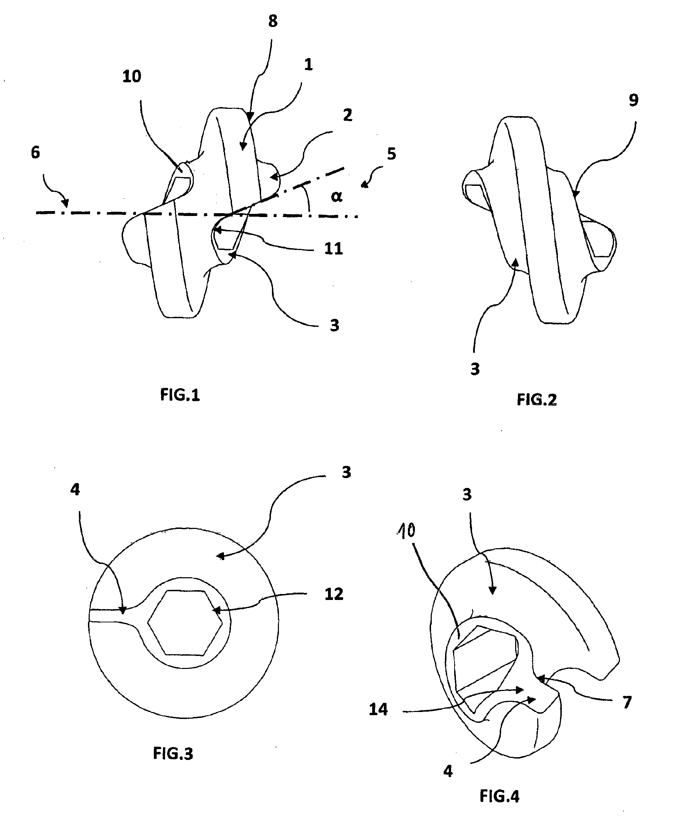

Selon l'exemple illustré notamment à la figure 4, lesdites zones 10 de raccordement entre noyaux 2, destinées à être mutuellement en appui entre deux secteurs successifs 3, d'une part, et la face de terminaison 4 de la spire 1 de l'extrémité correspondante dudit secteur 3, d'autre part, constituent une surface d'appui 4, 10 (entre secteurs 3), non plane, notamment sans arête, la zone 10 de raccordement du noyau 2 suivant notamment une trajectoire parallèle à la trajectoire de la spire 1.

Dans la forme de réalisation selon la figure 3, le secteur 3 comprend en son centre et selon l'axe 13 de la vis d'Archimède une ouverture 12 dont la forme correspond à celle de l'axe 13. Les dimensions de l'ouverture 12 sont idéalement ajustées pour permettent un montage par glissement le long de l'axe 13 sans formation d'un jeu excessif entre l'axe 13 et le secteur 3.

Selon une variante de réalisation illustrée sur la figure 4, le secteur 3 ainsi obtenu a la particularité de s'emboîter sur d'autres secteurs 3 sans laisser de lacunes ou conduire à la formation d'arête vives lorsque ces mêmes secteurs 3 sont assemblés sur un axe 13 qui est, à titre d'exemple non limitatif, de forme hexagonale. L'assemblage de ces secteurs 3 sur un axe 13 permet de réaliser une vis d'Archimède. La longueur de la vis ainsi réalisée dépend de la longueur de l'axe 13 et du nombre de secteurs 3. La fixation des premiers et derniers secteurs 3 de la vis d'Archimède permettant de maintenir l'ensemble sur l'axe 13 est obtenue par fixation mécanique classique telle que le vissage ou le boulonnage.

Afin de faciliter le montage, selon un mode de réalisation, chaque secteur 3 intermédiaire de la vis d'Archimède peut présenter, respectivement à ses deux extrémités, deux surfaces d'appui 4, 0, identiques, de sorte à pouvoir être monté indifféremment, dans un sens ou dans l'autre sur ledit axe 13.

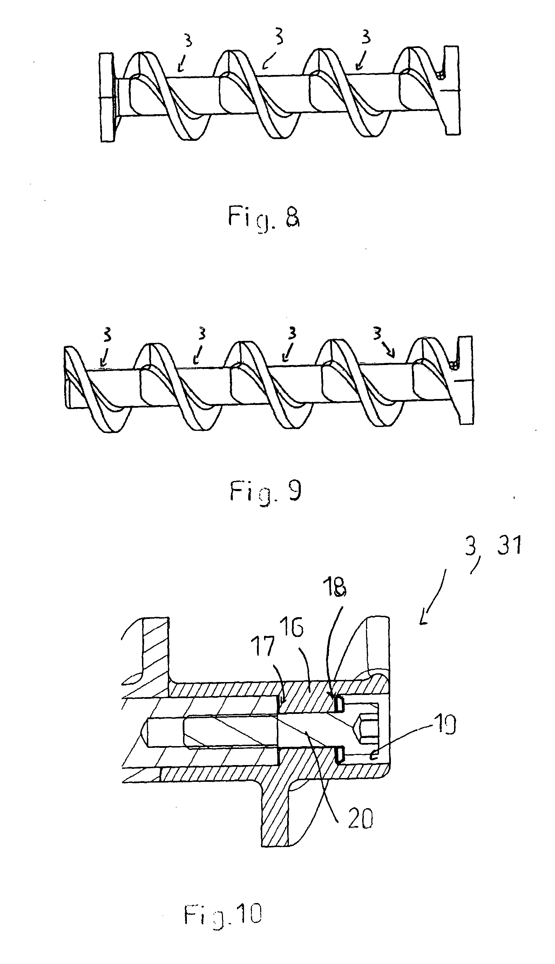

Selon un mode de réalisation, notamment illustré selon un exemple à la figure 10, ladite ouverture 12 d'un secteur d'extrémité 31, 35, 36 de la vis d'Archimède est traversant, de part et d'autre dudit secteur d'extrémité 31, 35, 36 et présente une réduction de section 16, interne.

Cette réduction de section 16 constitue, d'une part, un premier épaulement 17 destiné à constituer une butée pour l'extrémité de l'axe 13, et d'autre part, un deuxième épaulement 18 destiné à constituer une butée pour un organe de fixation 20 destiné à coopérer avec ladite extrémité dudit axe 13.

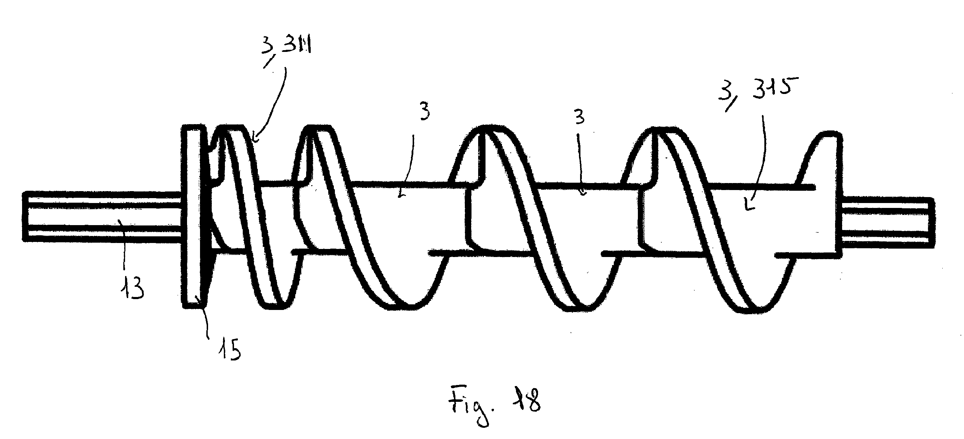

Selon un autre mode de réalisation illustré à la figure 18, le secteur d'extrémité 311, 315, notamment ouvert ou fermé, peut être dépourvu de réduction de section, ledit axe 13 ressortant notamment en saillie dudit section 311,315.

Les secteurs 3 sont alors maintenus entre eux par tout moyen adapté, notamment par vissage.

Selon l'exemple de la figure 10, l'organe de fixation est une vis de fixation qui engage par vissage avec un taraudage à l'extrémité de l'axe 13. Le premier épaulement 17 est en butée avec l'extrémité de l'axe 13. Le deuxième épaulement 18 est en butée avec la tête de la vis de fixation, qui, telle qu'illustrée peut être logée dans l'ouverture 12. Eventuellement une ou plusieurs rondelles, notamment rondelles Belleville peuvent être prévue(s) entre l'organe de fixation 20, notamment la tête de la vis, et ledit deuxième épaulement 18.

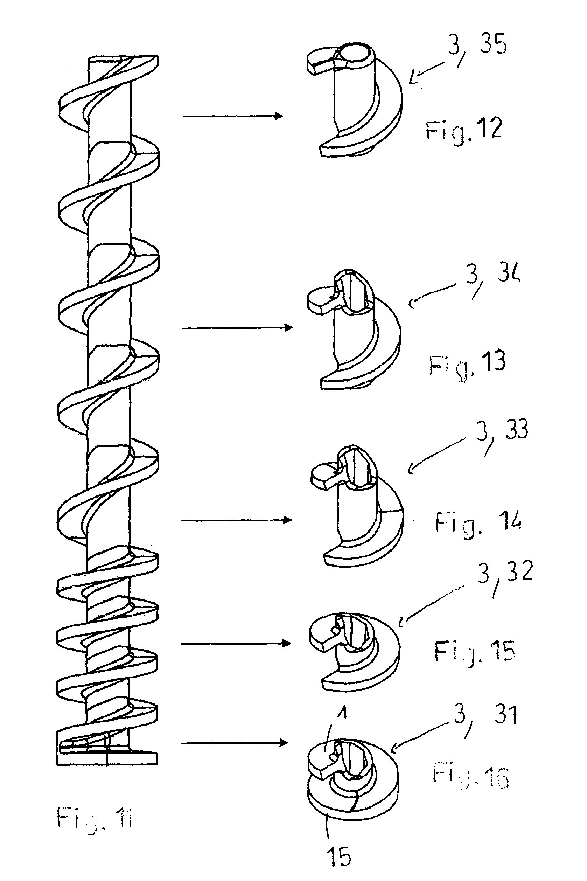

Selon un mode de réalisation, le kit permet la réalisation de vis d'Archimède présentant une extrémité fermée telle qu'illustrée à la figure 9 ou 11, voire deux extrémités fermées, telles qu'illustrées à la figure 8.

A cet effet, l'un des secteurs 3 au moins est un secteur d'extrémité fermée 31, 36, ladite spire 1 dudit secteur 31,36 étant prolongée par un disque de fermeture 15, de même diamètre que ladite spire 1.

Selon un mode de réalisation, le kit permet la réalisation de vis d'Archimède présentant une extrémité ouverte, telle qu'illustrée à la figure 9 ou 11, voire deux extrémités ouvertes.

A cet effet l'un des secteurs 3 au moins est un secteur d'extrémité ouvert 35, l'une des extrémités de la spire 1 dudit secteur se terminant par une tranche libre 21, notamment arrondie.

L'invention permet de réaliser des vis d'Archimède à pas constant, telles qu'illustrées notamment aux figures 8 et 9, ou encore des vis d'Archimède à pas variable, telle qu'illustrée à la figure 11.

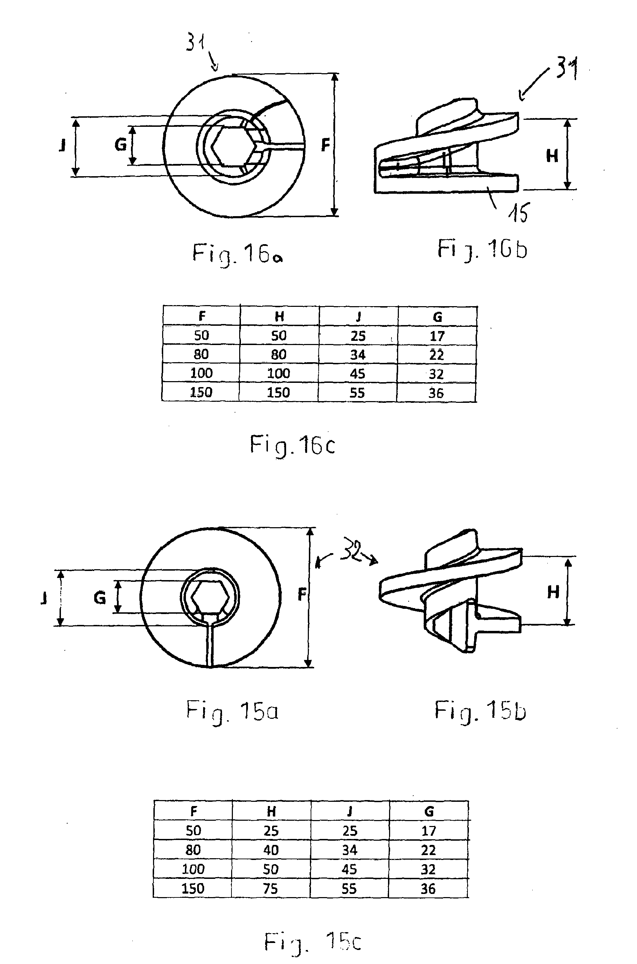

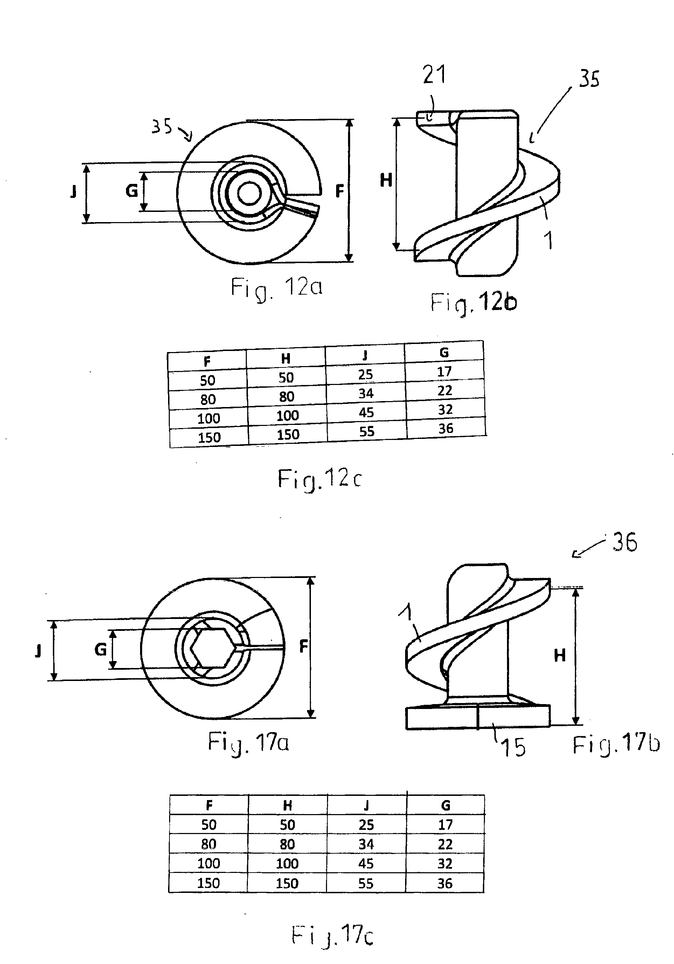

Les tableaux des figures 12c, 13c, 14c, 15c, 16c et 17c illustrent, à titre d'exemples non limitatifs divers dimensionnements des secteurs 31, 32, 33, 34, 35, 36. Chaque ligne d'un tableau représente un exemple de dimensionnement possible pour un secteur 3.

Dans ces tableaux :
- la cote F est le diamètre du filet (ou de la spire 1),
- la cote H est le pas de la vis d'Archimède (ou de la spire 1),
- la cote J est le diamètre de l'âme du secteur, encore appelé noyau 2,
- la cote G est la dimension pour le passage de l'axe 13.

Selon l'exemple de la figure 11, on note que le pas de vis des secteurs repérés 31,32 est inférieur au pas de vis des secteurs repérés 34 et 35. Afin d'assurer une continuité de la vis d'Archimède entre ces secteurs 31, 32, 34, 35 il est prévu un secteur 33, de transition, dont la spire 1 permet une continuité parfaite du filet de la vis d'Archimède entre deux sections de vis, de pas distincts.

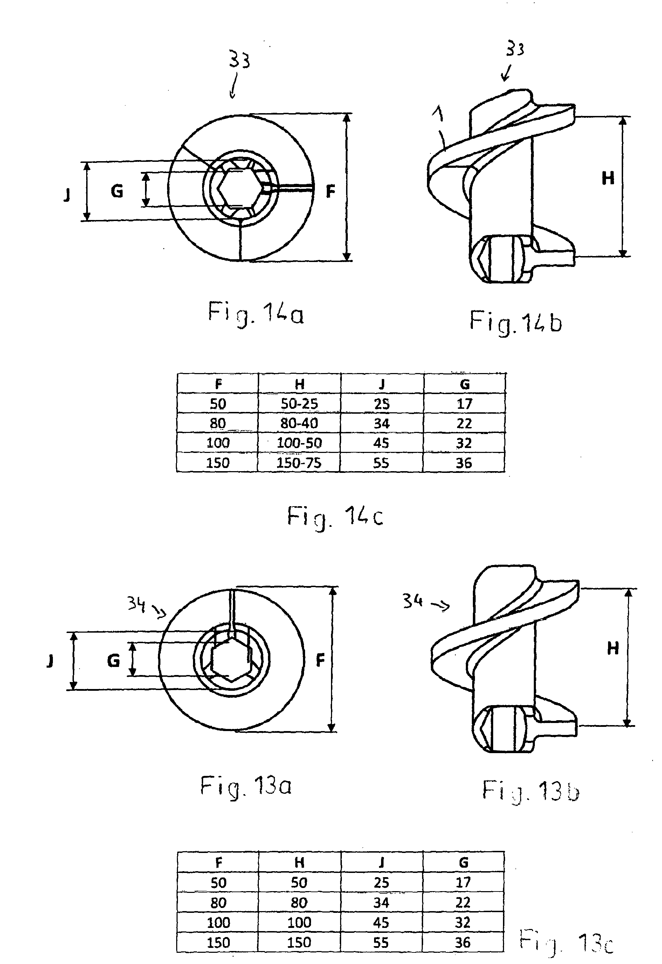

Dans le cas particulier de ce secteur de transmission 33, la cote H du tableau tel qu'illustré à la figure 14c, indique, pour chaque ligne du tableau, deux valeurs distinctes. La première valeur (exemple 25 millimètres, ligne 1 du tableau) correspond au pas de vis du secteur 32 précédent de la vis d'Archimède auquel le secteur de transition 33 doit être raccordé, la seconde valeur (exemple 50 millimètres, ligne 1 du tableau) correspondant au pas de vis du secteur 34 suivant de la vis d'Archimède auquel le secteur de transition 33 doit être raccordé.

Par ailleurs, le corps formant le noyau 2 et la spire 1 de chaque secteur 3 peut consister en une pièce plastique d'un seul tenant. Chacun des secteurs peut notamment être fabriqué, aisément et à moindre coût, en une matière synthétique, telle que le plastique, par les techniques de moulages par injection.

A titre d'exemple non limitatif le secteur 3 aura des dimensions de 100 mm de diamètre pour une hauteur de pas de l'ordre de 40 mm.

Le kit selon l'invention est particulièrement destiné à la réalisation de systèmes de dosage ou de pompage de produits visqueux, pulvérulents ou en granulés comportant au moins une vis d'Archimède.

## Revendications

1. Kit comprenant plusieurs secteurs (S) aptes à être assemblés de manière contiguë sur un axe (13) pour réaliser une vis d'Archimède, **caractérisé en ce que** les secteurs (3) comprennent un seul filet de longueur correspondant à un pas de vis, constituant une spire (1) de la vis d'Archimède et dans lequel les secteurs (3) sont aptes à s'imbriquer l'un dans l'autre sur ledit axe (13), sans formation de lacunes, ni d'arêtes tranchantes, de telle façon à former la spirale hélicoïdale de la vis d'Archimède, et **en ce que** les secteurs (3) présentent des faces de terminaison (4) de spire (1), chaque face de terminaison (4) de spire étant inclinée d'un angle (5) par rapport à l'axe (6) du secteur (3) de telle façon que les faces de terminaison (4) de spire mutuellement en appui de deux secteurs successifs (3) de la vis d'Archimède soient aptes à permettre une transmission de couple entre lesdits deux secteurs successifs (3) et **en ce que** chaque secteur (3) comprend, outre ledit filet (1) constituant la spire (1) de la vis d'Archimède, un noyau (2) pourvu d'une ouverture (12) destinée pour le passage dudit axe (13), au jeu d'emboîtement près, lesdits secteurs (3) étant destinés à être enfilés sur ledit axe (13) pour réaliser la vis d'Archimède, les secteurs (3) présentant des zones (10) de raccordement entre noyaux (2), lesdites zones (10) étant destinées à être mutuellement en appui entre deux secteurs successifs (3) de la vis d'Archimède, ladite zone (10) de raccordement entre noyaux (2) d'un secteur (3), d'une part, et la face de terminaison (4) de spire (1) de l'extrémité correspondante dudit secteur (3), d'autre part, constituant une surface d'appui (4, 10) non plane entre secteurs (3).

2. Kit selon la revendication 1, dans lequel ledit angle (5) d'inclinaison entre la face de terminaison (4) de la spire (1) et l'axe (6) du secteur (3) est compris entre 0° et 50°.

3. Kit selon la revendication 2, dans lequel ledit angle (5) d'inclinaison entre la face de terminaison (4) de la spire (1) et l'axe (6) du secteur (3) est compris entre 15° et 30°.

4. Kit selon la revendication 1, dans lequel ledit angle (5) d'inclinaison entre la face de terminaison (4) de la spire (1) et l'axe (6) du secteur (3) est de 25°.

5. Kit selon l'une des revendications 1 à 4, dans lequel ladite surface d'appui (4, 10) entre secteurs (3) est sans arête, la zone (10) de raccordement du noyau (2) suivant une trajectoire parallèle à la trajectoire de la spire (1).

6. Kit selon l'une des revendications 1 à 5, dans lequel ladite ouverture (12) destinée pour le passage de l'axe (13) est de section polygonale, notamment hexagonale.

7. Kit selon l'une des revendications 1 à 6, dans lequel le corps formant le noyau (2) et la spire (1) de chaque secteur (3) consiste en une pièce plastique d'un seul tenant.

8. Kit selon l'une des revendications 1 à 7, dans lequel ladite ouverture (12) d'un secteur d'extrémité (31, 35, 36) est traversant, de part et d'autre dudit secteur d'extrémité (31, 35, 36), ladite ouverture (12) présentant une réduction de section interne (16) constituant, d'une part, un premier épaulement (17) destiné à constituer une butée pour l'extrémité de l'axe (13), et un deuxième épaulement (18) destiné à constituer une butée pour un organe de fixation (20), tel qu'un vis, destinée à coopérer avec ladite extrémité dudit axe (13).

9. Kit selon l'une des revendications 1 à 8, dans lequel la définition géométrique d'au moins un secteur (3) est obtenue au moins par la génération d'un volume à partir d'une section et balayage de cette section le long d'une génératrice constituée par la courbe hélicoïdale de la spire (1) dudit secteur (3), le plan servant de support à ladite section, permettant la génération du volume de la spire (1) et du noyau (2), étant incliné d'un angle identique à l'angle (5) d'inclinaison entre la face de terminaison (4) de la spire (1) et l'axe (6) du secteur (3).

10. Kit selon l'une des revendications 1 à 9, dans lequel l'un des secteurs (3) au moins est un secteur d'extrémité fermé (31, 36, 311), ladite spire (1) dudit secteur (31, 36, 311) étant prolongée par un disque de fermeture (15), de même diamètre que ladite spire (1).

11. Vis d'Archimède obtenue par imbrications successives des secteurs d'un kit selon l'une des revendications 1 à 10 montés sur un axe (13).

## Patentansprüche

1. Bausatz, umfassend mehrere Sektoren (S), die geeignet sind, auf einer Achse (13) aneinander stoßend zusammengefügt zu werden, um eine archimedische Schraube aufzubauen, **dadurch gekennzeichnet, dass** die Sektoren (3) einen einzigen Gang mit einer Länge, die einer Gewindesteigung entspricht, der eine Windung (1) der archimedischen Schraube bildet, umfassen und wobei die Sektoren (3) geeignet sind, auf der Achse (13) ineinanderzugreifen, ohne Lücken oder scharfe Kanten zu bilden, um die schneckenförmige Spirale der archimedischen Schraube zu bilden, und dadurch, dass die Sektoren (3) Endseiten (4) der Windung (1) aufweisen, wobei jede Endseite (4) der Windung in einem Winkel (5) zur Achse (6) des Sektors (3) geneigt ist, so dass die gegeneinander in Anlage gebrachten Endseiten (4) der Windung von zwei aufeinander folgenden Sektoren (3) der archimedischen Schraube geeignet sind, eine Drehmomentübertragung zwischen den beiden aufeinanderfolgenden Sektoren (3) zu ermöglichen, und dadurch, dass jeder Sektor (3), neben dem Gang (1), der die Windung (1) der archimedischen Schraube bildet, einen Kern (2) umfasst, der mit einer Öffnung (12) mit enger Passung versehen ist, die für den Durchgang der Achse (13) bestimmt ist, wobei die Sektoren (3) dazu bestimmt sind, auf der Achse (13) aufgereiht zu werden, um die archimedische Schraube aufzubauen, wobei die Sektoren (3) Verbindungszonen (10) zwischen Kernen (2) aufweisen, wobei die Verbindungszonen (10) dazu bestimmt sind, zwischen zwei aufeinanderfolgenden Sektoren (3) der archimedischen Schraube gegeneinander in Anlage gebracht zu werden, wobei die Verbindungszone (10) zwischen Kernen (2) eines Sektors (3) einerseits und die Endseite (4) der Windung (1) des entsprechenden Endes des Sektors (3) andererseits eine nicht ebene Anlagefläche (4, 10) zwischen den Sektoren (3) bilden.

2. Bausatz nach Anspruch 1, wobei der Neigungswinkel (5) zwischen der Endseite (4) der Windung (1) der Achse (6) des Sektors (3) im Bereich zwischen 0° und 50° liegt.

3. Bausatz nach Anspruch 2, wobei der Neigungswinkel (5) zwischen der Endseite (4) der Windung (1) der Achse (6) des Sektors (3) im Bereich zwischen 15° und 30° liegt.

4. Bausatz nach Anspruch 1, wobei der Neigungswinkel (5) zwischen der Endseite (4) der Windung (1) der Achse (6) des Sektors (3) 25° beträgt.

5. Bausatz nach einem der Ansprüche 1 bis 4, wobei die Anlagefläche (4, 10) zwischen den Sektoren (3) keine Kante aufweist, wobei die Verbindungszone (10) des Kerns (2) einem Weg folgt, der parallel zum Weg der Windung (1) verläuft.

6. Bausatz nach einem der Ansprüche 1 bis 5, wobei die Öffnung (12), die für den Durchgang der Achse (13) bestimmt ist, einen polygonalen, insbesondere hexagonalen Querschnitt aufweist.

7. Bausatz nach einem der Ansprüche 1 bis 6, wobei der Körper, der den Kern (2) und die Windung (1) jedes Sektors (3) bildet, aus einem einstückigen Kunststoffteil besteht.

8. Bausatz nach einem der Ansprüche 1 bis 7, wobei die Öffnung (12) eines Endsektors (31, 35, 36) von einer Seite zur anderen Seite des Endsektors (31, 35, 36) durchgehend ist, wobei die Öffnung (12) eine Verringerung des Innenquerschnitts (16) aufweist, die einerseits eine erste Stufe (17) bildet, die dazu bestimmt ist, einen Anschlag für das Ende der Achse (13) zu bilden, und eine zweite Stufe (18), die dazu bestimmt ist, einen Anschlag für ein Befestigungselement (20), wie etwa eine Schraube, zu bilden, die dazu bestimmt ist, mit dem Ende der Achse (13) zusammenzuwirken.

9. Bausatz nach einem der Ansprüche 1 bis 8, wobei die geometrische Definition mindestens eines Sektors (3) mindestens durch die Erzeugung eines Volumens erhalten wird, ausgehend von einem Abschnitt und Abtasten dieses Abschnitts entlang einer Mantellinie, die von der schneckenförmigen Krümmung der Windung (1) des Sektors (3) gebildet wird, wobei die Ebene, die als Träger für den Abschnitt dient, die Erzeugung des Volumens der Windung (1) und des Kerns (2) ermöglicht, wobei sie in einem Winkel geneigt ist, der mit dem Neigungswinkel (5) zwischen der Endseite (4) der Windung (1) und der Achse (6) des Sektors (3) identisch ist.

10. Bausatz nach einem der Ansprüche 1 bis 9, wobei mindestens einer der Sektoren (3) ein geschlossener Endsektor (31, 36, 311) ist, wobei die Windung (1) des Sektors (31, 36, 311) um einen Schließteller (15) verlängert ist, der den gleichen Durchmesser wie die Windung (1) aufweist.

11. Archimedische Schraube, die durch fortlaufendes Ineinandergreifen der Sektoren eines Bausatzes nach einem der Ansprüche 1 bis 10, die auf einer Achse (13) angeordnet sind, erhalten wird.

## Claims

1. Kit comprising several sectors (3) to be assembled contiguously on a shaft (13) in order to produce an Archimedes screw **characterised in that** the sectors (3) consist of a single long thread corresponding to a screw pitch, constituting a turn (1) of the Archimedes screw, and in which the sectors (3) are interleaved in one another on a shaft (13), without the formation of gaps or sharp edges, in such a way as to form the helicoidal spiral of the Archimedes screw, and **in that** the sectors (3) have termination faces (4) of a turn (1), each termination face (4) being inclined by an angle (5) with respect to the shaft (6) of the sector (3) so that the termination faces (4) mutually in abutment of two successive sectors (3) of the Archimedes screw are able to provide a transmission of torque between said two successive sectors (3), and in which each sector (3) comprises, apart from the thread (1) constituting the turn (1) of the Archimedes screw, a core (2) provided with an opening (12) intended for passage of said shaft (13), to within the fitting clearance, said sectors (3) being intended to be fitted on said shaft (13) in order to produce the Archimedes screw, and in which the sectors (3) have areas (10) of connection between cores (2), said areas (10) being intended to be mutually in abutment between two successive sectors (3) of the Archimedes screw, said area (10) of connection between cores (2) of a sector (3) on the one hand and the termination face (4) of the turn (1) of the corresponding end of said sector (3) on the other hand constituting a non-planar bearing surface (4, 10) between sectors (3).

2. Kit according to claim 1, in which said angle of inclination (5) between the termination face (4) of the turn (1) and the shaft (6) of the sector (3) is between 0° and 50°.

3. Kit according to claim 2, in which said angle of inclination (5) between the termination face (4) of the turn (1) and the shaft (6) of the sector (3) is between between 15° and 30°.

4. Kit according to claim 1, in which said angle of inclination (5) between the termination face (4) of the turn (1) and the shaft (6) of the sector (3) is 25°.

5. Kit according to one of the claims 1 to 4, in which said bearing surface (4, 10) between sectors (3) has no ridge, the area (10) of connection of the core (2) following a path parallel to the path of the turn (1).

6. Kit according to one of claims 1 to 5, in which said opening (12) intended for the passage of the shaft (13) has a polygonal, in particular hexagonal, cross section.

7. Kit according to one of claims 1 to 6, in which the body forming the core (2) and the turn (1) of each sector (3) consists of a plastic part in a single piece.

8. Kit according to one of claims 1 to 7, in which said opening (12) of an end sector (31, 35, 36) passes right through said end sector (31, 35, 36), said opening (12) having a reduction in internal cross section (16) constituting first a first shoulder (17) intended to constitute a stop for the end of the shaft (13) and a second shoulder (18) intended to constitute a stop for a fixing member (20), such as a screw, intended to cooperate with said end of said shaft (13).

9. Kit according to one of claims 1 to 8, in which the geometric definition of at least one sector (3) is obtained at least by generating a volume from a cross section and scanning this cross section along a generatrix formed by the helicoidal curve of the turn (1) of said sector (3), the plane serving as a support for said cross section, enabling generation of the volume of the turn (1) and core (2), being inclined by an angle identical to the angle of inclination (5) between the termination face (4) of the turn (1) and the shaft (6) of the sector (3).

10. Kit according to one of claims 1 to 9, in which one of the sectors (3) at least is a sector with a closed end (31, 36, 311), said turn (1) of said sector (31, 36, 311) being extended by a closure disc (15) with the same diameter as said turn (1).

11. Archimedes screw obtained by successive interleavings of the sectors of a kit according to one of claims 1 to 10 assembled on a shaft (13).
